# FASCICULE DE BREVET EUROPEEN

(11) **EP 3 602 203 B1**
(45) Date de publication et mention de la délivrance du brevet: **08.06.2022**
(21) Numéro de dépôt: 18718217.5
(22) Date de dépôt: 27.03.2018
(51) Int. Cl.: G04B 39/00

(54) **DISPOSITIF DE LECTURE D'UN APPAREIL A GLACE OU ECRAN**
LESEVORRICHTUNG FÜR EINE EINRICHTUNG MIT GLAS ODER BILDSCHIRM
READING DEVICE FOR AN APPARATUS WITH GLASS OR SCREEN

(30) Priorité: 27.03.2017 CH 4002017
(43) Date de publication de la demande: 05.02.2020
(73) Titulaire: FGP Capital SA, 1201 Genève (CH)
(72) Inventeur: CAVALCA, Fabrizio, 1227 Carouge (CH); GRAND, René, 1294 Genthod (CH); FROEHLICHER, Philippe, 1204 Genève (CH)
(74) Mandataire: Cronin, Brian Harold John
(86) Numéro de dépôt international: PCT/IB2018/052071
(87) Numéro de publication internationale: WO 2018/178858

(56) Documents cités:
- WO-A1-03/009049
- CN-U- 205 179 147
- JP-A- H05 333 164
- JP-A- 2000 174 866
- JP-A- 2015 072 146
- US-A1- 2012 243 110

## Description

La présente invention se rapporte à un dispositif de lecture pour grossir un affichage, notamment pour des appareils comportant une glace ou écran tout en garantissant une protection anti-rayure de l'appareil et accessoirement une étanchéité de l'appareil.

On connaît ainsi par exemple DE202015004726 qui décrit un film auto-adhésif pour smartphone ou tablette avec différente forces de dioptries. Ce document ne donne aucun enseignement technique et ne décrit qu'une idée.

On connait de l'état de la technique des verres de montre équipés de loupe pour grossir un affichage du quantième, notamment en usinant la loupe dans le verre de montre. L'avantage d'une telle loupe est qu'elle permet une lecture plus aisée de l'information mais l'inconvénient est qu'elle nuit à l'esthétique de la montre.

CH368756 décrit une pièce d'horlogerie à calendrier, dont le cadran présente un guichet dans lequel apparaissent les indications du quantième et qui est surmonté d'une loupe que comprend la glace. La loupe est entourée d'un cadre qui est solidaire de la glace et logé ou noyé dans celle-ci.

EP0693718 décrit une montre comprenant un boîtier, des premiers moyens d'affichage, un premier miroir et des moyens optiques de grossissement agencés de manière à grossir optiquement les moyens d'affichage.

EP3062172 décrit une montre comprenant un boîtier muni d'un verre de montre et un mouvement horloger logé dans ce boîtier. Le verre de montre supporte un dispositif optique grossissant prévu pour visuellement grossir au moins momentanément un élément du mouvement horloger visible au travers de ce verre de montre. La mise en œuvre de cette réalisation reste complexe.

GB 2402229 décrit un appareil destiné à afficher une information, comportant une lentille agencée pour faciliter la lecture et fixée de manière amovible par une colle ou une ventouse. Un inconvénient de cette réalisation est que le posage de la lentille se fait de manière approximative ce qui a quelques dizaine de millimètre près peut fausser la lecture et avoir un effet contraire à ce qu'un utilisateur rechercherait, c'est-à-dire une aide à la lecture.
WO03009049 divulgue une lentille pour un écran comportant une seconde face opposée portant un film transparent de colle repositionnable par laquelle la lentille est collable de manière amovible sur la surface externe de la glace ou l'écran.
JPH05333164 décrit un verre de protection multicouche pour montres composé de verre saphir à l'avant et d'un type de verre différent du verre saphir à l'arrière avec un film adhésif en résine synthétique pris en sandwich entre eux.
JP2015072146 décrit un verre de couverture pour une montre-bracelet en verre saphir, qui est un verre de couverture pour une montre-bracelet ayant une partie fenêtre, dans lequel tout ou partie de la partie fenêtre est une lentille ayant une surface convexe et une surface convexe.

Le but de la présente invention est de proposer un dispositif de lecture amovible pour grossir un affichage pour des appareils comportant une glace ou un écran dont l'échange est précis et facile tout en offrant une protection anti-rayure de la glace ou de l'écran et accessoirement préservant l'étanchéité de l'appareil.

Conformément à l'invention, une glace ou écran d'un appareil destiné à afficher une information visible par un utilisateur, comporte à sa surface externe un film transparent protecteur à comportant une surface externe avec une zone bombée constituant une lentille afin de faciliter la lecture. Le film transparent protecteur constituant une lentille est une couche de matériau comporte la surface externe bombée et une surface interne portant un film de colle repositionnable transparent par lequel ladite couche collée de manière amovible à la surface externe de la glace ou de l'écran.

Une première couche de matériau constituant la surface de la glace ou de l'écran est formée d'un polycarbonate d'une épaisseur comprise entre 0.2mm et 2mm, typiquement 0.8 à 1.2mm.

Ladite couche à surface externe bombée est une seconde couche formée d'un verre transparent en saphir ayant une surface anti-rayure et est superposée sur la première couche grâce à des moyens de positionnement, dans lequel la seconde couche de verre saphir a une épaisseur maximale hors zone bombée comprise entre 0.2 et 2mm, par exemple 0.4mm et 1,2mm, typiquement 0.5 et 0.6mm.

Les moyens de positionnement pour faciliter le positionnement de la seconde couche de matériau sur la première couche de matériau comporte une protubérance ou une rainure, agencés sur la périphérie externe ou interne du premier matériau de manière à ce que ces moyens de positionnement entourent toute ou partie de la seconde couche de matériau qui recouvre la première couche de matériau.

Ainsi, le film de colle repositionnable transparent est déposé sur la face interne de la seconde couche de matériau en verre transparent, de manière à ce que la seconde couche de matériau avec la colle repositionnable puisse être retirée sans rompre l'étanchéité dudit appareil.

Par ailleurs, en plus de ce besoin de grossissement d'une information visible sur un écran ou à travers une glace, la présente invention permet de protéger l'esthétique de l'écran ou de la glace tout en conservant accessoirement une étanchéité de l'appareil. En effet, la dégradation de l'aspect visuel d'un appareil comportant une glace ou un écran, par exemple une montre, lors du porter est un facteur de perception de qualité essentiel pour le consommateur. De plus l'étanchéité des appareils comportant des glaces ou des écrans est importante pour le bon fonctionnement desdits appareils.

La première couche de matériau, la seconde couche de matériau et le film de colle repositionnable, une fois empilés, ont typiquement une épaisseur comprise entre 0.8mm et 5mm, par exemple 2mm.

Dans une exécution, les moyens de positionnement comportent un cran formé dans la première couche de matériau, par exemple ce cran constitue une protubérance périphérique externe de la première couche de matériau.

Dans ces exécutions, la première couche de matériau et/ou la seconde couche de matériau ont avantageusement un traitement antireflet au rayonnement optique dans le domaine des longueurs d'onde visible.

Dans une forme d'exécution, le système comporte des moyens d'étanchéité comportant une protubérance, un joint ou un collage agencé sur la périphérie externe du premier matériau.

Dans une forme d'exécution, l'étanchéité de l'appareil peut être assurée par un joint torique qui serait positionné entre l'appareil et la première couche de matériau ou par un collage à l'ultrason qui serait réalisé sur la première couche de matériau.

Dans une forme d'exécution, la lentille est une lentille convergente comportant une vergence comprise entre 0,25 et 4 dioptries, typiquement 2. Selon la présente invention, il donc possible d'utiliser différentes lentilles en verre transparent, notamment en saphir reconstitué, à convergence permettant une adaptation de la dioptrie en fonction de la capacité de lecture de l'utilisateur. En effet, certains utilisateurs se sentiront plus confortables que d'autres en fonction du grossissement artificiel de l'image sous la glace par une dioptrie plus ou moins prononcée. Un avantage de cette possibilité de retirer de l'appareil une lentille ayant une dioptrie donnée est qu'en fonction de la vision de deux utilisateurs, chacun d'eux pourra utiliser le même appareil en adaptant à sa vue la lentille adéquate.

A cet effet, les utilisateurs pourront se procurer des jeux de lentilles dont la dioptrie de chaque lentille est la même ou qui varie d'une lentille à l'autre.

L'invention s'applique notamment aux montres-bracelets, smartphones, tablettes, bornes intéractives, consoles de jeu, tables tactile et bancomats.

On choisit la colle repositionnable transparente de façon adaptée en ajustant ses propriétés mécaniques et pour qu'elle soit compatible avec le support sur lequel elle est enduite d'une part, et le support sur lequel elle est collé de manière repositionnable. De préférence, la colle repositionnable est déposée en sortie de fabrication de la glace de verre transparent, par exemple par pulvérisation et de manière homogène sur toute la surface de verre. Avantageusement, la colle est choisie parmi les colles permettant une prise quasi-instantanée en surface sur la glace de verre. Par exemple, la colle peut avoir été recouverte après un temps de séchage d'une pellicule de PTFE (polytétrafluoroéthylène) que l'utilisateur décolle avant le collage de la glace saphir sur la première couche de matériau.

Dans une variante, la colle appliquée à la surface interne de la couche de matériau en verre saphir est sous forme de ruban adhésif double face avec un support polyester et un adhésif de surface très performant qui fournit une bonne adhésion sur les substrats à haute et basse énergie de surface. L'épaisseur de la colle repositionnable est comprise entre 80 microns et 250 microns en fonction du modèle choisi. Le ruban double face est bien entendu transparent. Par ailleurs, la colle a une très bonne résistance au cisaillement et au pelage. De préférence la colle a une force d'adhérence comprise entre 5N/cm et 50N/cm, typiquement 15N/cm côté interne de la couche de matériau en verre saphir.

Un tel dispositif mobile permettant de cumuler l'aspect étanchéité et l'aspect inrayabilité peut être par exemple non seulement une montre-bracelet, un smartphone, une tablette voire tout autre appareil portatif semblable comportant un écran telle une console de jeu portable mais encore un appareil fixe, notamment une borne interactive, un horodateur ou un distributeur automatique comme par exemple un bancomat.

Selon un autre aspect de l'invention, une lentille comporte une couche en verre transparent en saphir, ayant une surface anti-rayure sur une première face, une seconde face opposée portant un film transparent de colle repositionnable par laquelle la lentille peut être collée de manière amovible sur la surface externe de la glace ou l'écran, avec un positionnement précis et facile grâce aux moyens de positionnement sur une première couche complémentaire.

De préférence, la lentille comporte une dioptrie comprise entre 0.5 dioptrie et 4 dioptries, typiquement 2.

Dans une forme d'exécution, un jeu de lentilles comporte des lentilles dont la dioptrie de chaque lentille du jeu a une valeur comprise entre 0, 5 et 4 dioptries. Par exemple un jeu de lentilles peut comporter des lentilles dont la dioptrie de chaque lentille est la même ou qui varie d'une lentille du jeu toujours pour une valeur comprise entre 0, 5 et 4 dioptries.

Les caractéristiques de l'invention apparaitront plus clairement à la lecture de la description de plusieurs formes d'exécution données uniquement à titre d'exemple, nullement limitative en se référant aux figures schématiques, dans lesquelles :
- La figure 1 représente une vue en coupe d'un empilement de couche de matériaux selon la présente invention ;
- La figure 2 représente une vue en coupe d'un système monté sur un appareil comportant un écran ;
- La figure 3 représente une vue de côté d'une montre bracelet dans laquelle une glace amovible comportant une colle repositionnable est disposée pour être agencée sur une glace de la montre ; et
- La figure 4 représente une vue en perspective d'un smartphone comportant un système selon la présente invention.

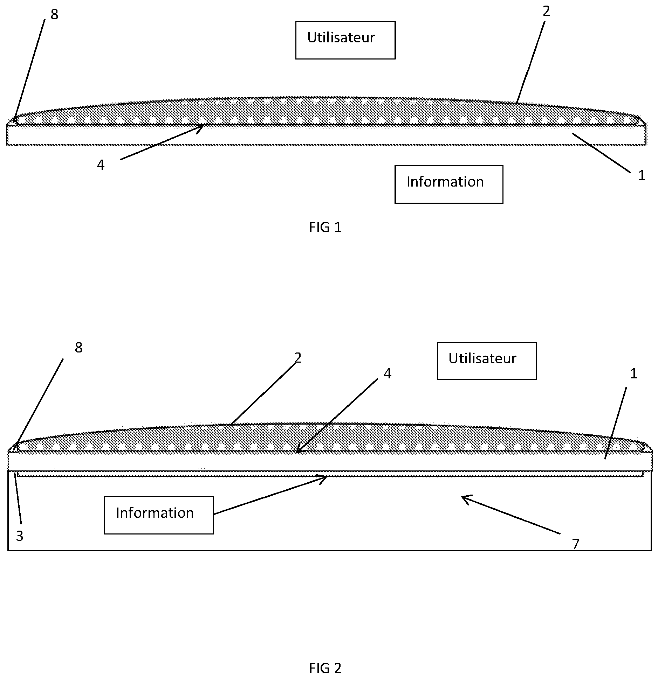

Dans la forme d'exécution illustrée à la figure 1, la glace d'un appareil destiné à afficher une information visible par un utilisateur comporte à sa surface externe un film transparent protecteur à surface externe bombée, constituant une lentille d'une valeur par exemple de deux dioptries afin de faciliter la lecture. Le film transparent protecteur constituant une lentille est une couche 2 de matériau en verre saphir transparent reconstitué, ayant une surface anti-rayure. Cette couche 2 comporte une surface externe bombée et une surface interne portant un film de colle repositionnable 4 transparent par lequel la couche 2 est collée de manière amovible à la surface externe d'une couche de matériau en polymère plastique transparent incassable 1, ici un polycarbonate, agencée pour être montée sur un appareil de manière à ce qu'une première face soit agencée côté information et une seconde face côté utilisateur. La seconde couche 2 de matériau en verre saphir transparent est superposée sur la première couche 1 grâce à des moyens de positionnement 8 sous forme d'une protubérance périphérique. La seconde couche 2 en verre saphir constitue le film transparent constituant la lentille. Le film de colle repositionnable 4 est agencé sur la face interne de la couche 2 de verre saphir transparent de manière à ce que la couche 2 de verre saphir avec la colle repositionnable 4 puissent être retirées sans rompre l'étanchéité dudit appareil.

Dans l'exemple de la figure 1, la zone bombée de la couche 2 s'étend jusqu'à la périphérie de celle-ci. Dans des variantes non illustrées, la couche 2 présente une zone bombée centrale entourée par une zone périphérique plate d'épaisseur constante.

Comme illustré à la figure 2, l'écran de la présente invention est agencé pour s'incorporer dans un appareil 7 sans dénaturer l'objet. L'appareil 7 comprend des moyens d'étanchéité 3 sous forme d'un soudage de l'extrémité périphérique de la première couche en polycarbonate 1 sur la périphérie externe de l'appareil 7. Des moyens de positionnement 8 entourent la lentille en verre saphir d'une valeur de environ deux dioptries qui recouvre la première couche 1 en polycarbonate. Un film de colle 4 repositionnable transparente est déposée sur la face interne de la seconde couche 2 en verre saphir transparent, de manière à ce que la seconde couche 2 de matériau avec la colle repositionnable 4 puisse être retirée sans rompre l'étanchéité dudit appareil 7 tout en adaptant la lentille en verre saphir à la vue de l'utilisateur.

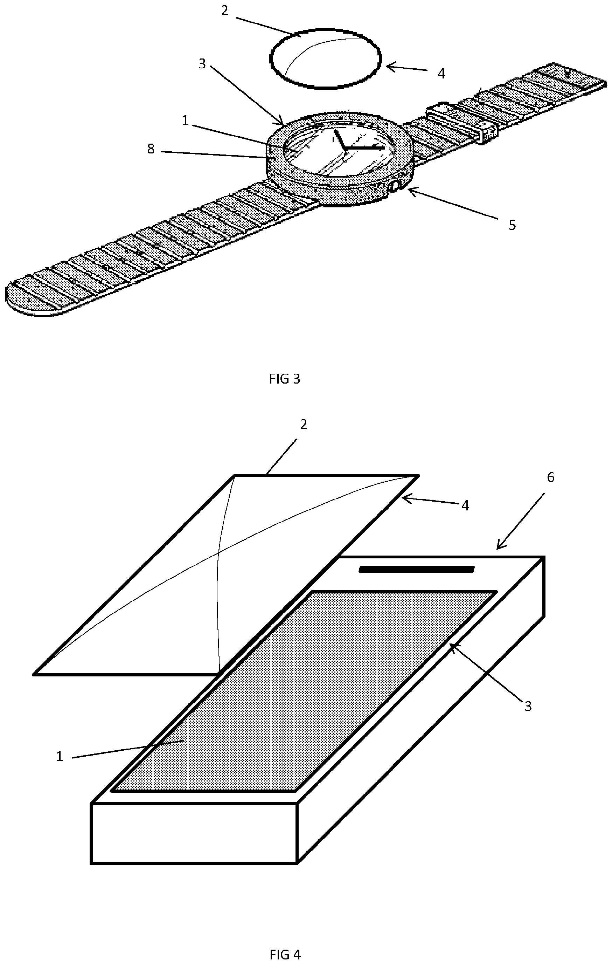

Dans l'exemple illustré à la figure 3, une montre-bracelet 5 comporte une glace de montre selon la présente invention. Non seulement la glace de montre amovible en verre saphir transparent sous forme de loupe permet un agrandissement de l'affichage présente sur le cadran de montre mais encore, à chaque changement de lentille, l'étanchéité de la montre-bracelet est préservée. Ainsi, la lentille en verre saphir offre un agrandissement de l'information et une protection anti-rayure de la montre-bracelet 5 destinée à afficher l'heure à travers la glace. Dans cet exemple, la première couche 1 de matériau est en polycarbonate transparent incassable. La couche de polycarbonate 1 est agencée sur la montre-bracelet 5 de manière à ce qu'une première face soit agencée côté cadran de la montre-bracelet 5 et une seconde face côté utilisateur. Le polycarbonate est une matière très utilisée dans le domaine horloger notamment pour sa robustesse et ce, malgré sa sensibilité aux rayures. Une seconde couche 2 en verre saphir transparent ayant une surface anti-rayure est prête à être agencée sur la couche de polycarbonate 1 montée sur la montre-bracelet 5. La lentille en verre saphir a une valeur par exemple de deux dioptries. La lentille en verre saphir transparent porte un film de colle repositionnable 4 agencée sur la face interne de la lentille en verre saphir transparent. Ainsi, la couche 2 de verre saphir avec la colle repositionnable 4 peut être superposée sur la première couche de polycarbonate 1 agencée sur la montre-bracelet 5 et si besoin, par exemple en cas de casse de la couche 2 de verre saphir, ou en cas d'adaptation de la lentille en saphir à la vue d'un autre utilisateur, la couche 2 de verre saphir peut être retirée sans rompre l'étanchéité de la montre-bracelet 5. Une lunette de montre offre un moyen de positionnement 8 de la glace saphir, la lunette de montre étant agencée sur la périphérie externe du polycarbonate 1 de manière à ce que ces moyens d'étanchéité 3 entourent la couche de polycarbonate 1 et ne soient jamais rompus en cas de changement de la glace saphir.

Dans une variante non illustrée, le verre saphir est contenu dans un cran de glace, logement creusé soit dans la lunette du boîtier, soit directement dans sa carrure.

Dans cet exemple, l'empilement des couches de polycarbonates, verre saphir et de la colle repositionnable représentent une épaisseur de 2,6mm. Le polycarbonate a une épaisseur de 1mm et le verre saphir une épaisseur de 0.55mm.

En ce qui concerne les smartphones, l'écran est de loin l'élément qui casse le plus fréquemment même s'il s'agit d'un verre renforcé. Le saphir est plus robuste et plus résistant aux rayures que le verre.

Comme illustré à la figure 4, un smartphone 6 comporte un écran tactile. Cet écran tactile est composé d'une première couche 1 de matériau en polymère plastique transparent incassable, ici un polycarbonate, la première couche 1 étant agencée sur le smartphone 6 de manière à ce qu'une première face soit agencée côté information et une seconde face côté utilisateur. Un film transparent protecteur constituant une lentille est une couche 2 de matériau en verre saphir transparent, ayant une surface anti-rayure. Cette lentille comporte une surface externe bombée et une surface interne portant un film de colle repositionnable 4 transparent par lequel la lentille, d'une valeur de environ deux dioptries, peut-être collée de manière amovible à la surface externe de l'écran. Cette lentille est prête à être superposée sur la première couche 1 grâce au film de colle repositionnable 4 transparente agencée sur la face interne de la lentille en verre saphir transparent.

Dans cet exemple, la colle repositionnable est compatible avec le support sur lequel elle est enduite d'une part, ici un verre saphir, et le support sur lequel elle est collée de manière repositionnable, ici un polycarbonate.

Selon la figure 4, un cran 3 dans la boite du smartphone 6 constitue une protubérance périphérique externe de la couche de polycarbonate 1 pour un positionnement plus aisé de la couche 2 formant la lentille.

Dans cet exemple, la première couche de matériau 1 et la seconde couche de matériau 2 ont un traitement anti-reflet au rayonnement optique dans le domaine des longueurs d'onde visible. La seconde couche 2 de matériau est un oxyde d'aluminium substantiellement monocristallin, plus précisément un saphir synthétique ayant une surface anti-rayure sur une première face, une seconde face opposée comportant un film de colle repositionnable 4.

Selon la présente invention, la création d'un sandwich comportant une couche en polycarbonate, une couche en saphir synthétique sous forme de lentille avec un liant invisible repositionnable, permet de ne jamais impacter l'étanchéité de l'appareil en cas de casse de la couche en verre saphir. Ainsi, la couche de verre saphir cassée peut être retirée, l'appareil restant fonctionnel et étanche jusqu'à la mise en place d'une nouvelle couche de verre saphir repositionnable. Ainsi, nous obtenons un état de surface inrayable, et en cas de choc de la glace, la couche en polycarbonate ne se brise pas et protège donc l'intérieur de l'appareil contre les poussières et l'humidité en attendant un remplacement. La lentille en verre saphir peut être adaptée à la vue d'un utilisateur. L'utilisateur peut choisir, lui-même, la lentille à dioptrie adaptée à sa vision.

Finalement, un appareil comportant une glace ou un écran selon l'invention peut accompagner un utilisateur tout au long de sa vie en s'adaptant à l'évolution de sa vue au moyen de la lentille interchangeable, tout en préservant la vue de l'utilisateur d'une part et l'étanchéité de l'appareil d'autre part.

## Revendications

1. Glace ou écran d'un appareil destiné à afficher une information visible par un utilisateur, la glace ou l'écran comportant à sa surface externe un film transparent protecteur à comportant une surface externe avec une zone bombée constituant une lentille afin de faciliter la lecture, le film transparent protecteur constituant une lentille est une couche (2) de matériau comportant la surface externe bombée et une surface interne portant un film de colle repositionnable (4) transparent par lequel ladite couche (2) collée de manière amovible à la surface externe de la glace ou de l'écran (1).
**Caractérisé en ce que**
une première couche (1) de matériau constituant la surface de la glace ou de l'écran est formée d'un polycarbonate d'une épaisseur comprise entre 0.2mm et 2mm, typiquement 0.8 à 1.2mm,
ladite couche (2) à surface externe bombée est une seconde couche formée d'un verre transparent en saphir ayant une surface anti-rayure et est superposée sur la première couche (1) grâce à des moyens de positionnement (8), dans lequel la seconde couche (2) de verre saphir a une épaisseur maximale y compris la zone bombée comprise entre 0.2 et 2mm, par exemple 0.4mm et 1,2mm, typiquement 0.5 et 0.6mm,
les moyens de positionnement (8) pour faciliter le positionnement de la seconde couche de matériau (2) sur la première couche de matériau (1) comportant une protubérance ou une rainure, agencés sur la périphérie externe ou interne du premier matériau (1) de manière à ce que ces moyens de positionnement (8) entourent toute ou partie de la seconde couche de matériau (2) qui recouvre la première couche de matériau (1).

2. Glace ou écran selon la revendication 1, dans lequel la première couche de matériau (1), la seconde couche de matériau (2) et le film de colle repositionnable (4), une fois empilés, ont une épaisseur comprise entre 0.8mm et 5mm, typiquement 2mm.

3. Glace ou écran selon l'une des revendications 1 ou 2, dans lequel les moyens de positionnement (8) comportent un cran formé dans la première couche (1) de matériau.

4. Glace ou écran selon la revendication 3, dans lequel ledit cran constitue une protubérance périphérique externe de la première couche (1) de matériau.

5. Glace ou écran selon l'une des revendications précédentes, dans lequel la première couche (1) de matériau et/ou la seconde couche (2) de matériau ont un traitement antireflet au rayonnement optique dans le domaine des longueurs d'onde visible.

6. Glace ou écran selon l'une des revendications précédentes, dans lequel la lentille est une lentille convergente comportant une vergence comprise entre 0,25 et 4 dioptries, typiquement 2.

7. Montre-bracelet comportant une glace selon l'une des revendications 1 à 6.

8. Smartphone comportant un écran selon l'une des revendications 1 à 6.

9. Tablette, borne interactive, console de jeu, bancomat ou table tactile comportant un écran selon l'une des revendications 1 à 6.

10. Lentille pour une glace ou un écran selon l'une des revendications 1 à 6, la lentille comportant une couche en verre saphir transparent, d'une épaisseur maximale comprise entre 0.2 et 2mm, par exemple 0.4mm et 1,2mm, typiquement 0.5 et 0.6mm, ayant une surface anti-rayure sur une première face, une seconde face opposée portant un film transparent de colle repositionnable (4) par laquelle la lentille est collable de manière amovible sur la surface externe de la glace ou l'écran.

11. Lentille selon la revendication 10, comportant une dioptrie comprise entre 0.5 dioptrie et 4 dioptries, typiquement 2.

12. Jeu de lentilles selon la revendication 11, dans lequel la dioptrie de chaque lentille du jeu a une valeur comprise entre 0,5 et 4 dioptries.

## Patentansprüche

1. Glas oder Display eines Geräts, das dazu bestimmt ist, eine für einen Benutzer sichtbare Information anzuzeigen, wobei das Glas oder Display an seiner äußeren Oberfläche einen transparenten Schutzfilm mit umfasst, der eine äußere Oberfläche mit einem gewölbten Bereich umfasst, der eine Linse darstellt, um das Lesen zu erleichtern, wobei der eine Linse darstellende transparente Schutzfilm eine Schicht (2) aus Material ist, welche die gewölbte äußere Oberfläche umfasst und eine innere Oberfläche, die einen transparenten wiederpositionierbaren Klebstofffilm (4) trägt, mit dem die Schicht (2) lösbar an die äußere Oberfläche des Glases oder Displays (1) geklebt,
**dadurch gekennzeichnet, dass**
eine erste Schicht (1) aus Material, welche die Oberfläche des Glases oder Displays darstellt, aus einem Polycarbonat mit einer Dicke zwischen 0,2 mm und 2 mm, typischerweise 0,8 mm bis 1,2 mm, gebildet ist,
die Schicht (2) mit gewölbter äußerer Oberfläche eine zweite Schicht ist, die aus einem transparenten Saphirglas mit einer kratzfesten Oberfläche gebildet ist und auf der ersten Schicht (1) dank von Positionierungsmitteln (8) angeordnet ist, wobei die zweite Schicht (2) aus Saphirglas eine maximale Dicke einschließlich des gewölbten Bereichs zwischen 0,2 und 2 mm, beispielsweise 0,4 mm und 1,2 mm, typischerweise 0,5 und 0,6 mm, hat,
wobei die Positionierungsmittel (8) zum Erleichtern der Positionierung der zweiten Materialschicht (2) auf der ersten Materialschicht (1) einen Vorsprung oder eine Nut umfassen, die am äußeren oder inneren Umfang des ersten Materials (1) angeordnet sind, so dass diese Positionierungsmittel (8) die gesamte oder einen Teil der zweiten Materialschicht (2) umgeben, welche die erste Materialschicht (1) bedeckt.

2. Glas oder Display nach Anspruch 1, bei dem die erste Materialschicht (1), die zweite Materialschicht (2) und der wiederpositionierbare Klebstofffilm (4), nach erfolgtem Stapeln, eine Dicke zwischen 0,8 mm und 5 mm haben, typischerweise 2 mm.

3. Glas oder Display nach einem der Ansprüche 1 oder 2, bei dem die Positionierungsmittel (8) ein Rastelement umfassen, das in der ersten Schicht (1) aus Material gebildet ist.

4. Glas oder Display nach Anspruch 3, bei dem das Rastelement einen äußeren Umfangsvorsprung der ersten Schicht (1) aus Material darstellt.

5. Glas oder Display nach einem der vorhergehenden Ansprüche, bei dem die erste Schicht (1) aus Material und/oder die zweite Schicht (2) aus Material eine Antireflexbehandlung gegenüber optischer Strahlung im sichtbaren Wellenlängenbereich haben.

6. Glas oder Display nach einem der vorhergehenden Ansprüche, bei dem die Linse eine Sammellinse ist, die eine Vergenz zwischen 0,25 und 4 Dioptrien, typischerweise 2, umfasst.

7. Armbanduhr mit einem Glas nach einem der Ansprüche 1 bis 6.

8. Smartphone mit einem Display nach einem der Ansprüche 1 bis 6.

9. Tablet, interaktives Terminal, Spielkonsole, Geldautomat oder Touch-Tisch mit einem Display nach einem der Ansprüche 1 bis 6.

10. Linse für ein Glas oder Display nach einem der Ansprüche 1 bis 6, wobei die Linse eine Schicht aus transparentem Saphirglas mit einer maximalen Dicke zwischen 0,2 und 2 mm, beispielsweise 0,4 mm und 1,2 mm, typischerweise 0,5 und 0,6 mm, umfasst, das eine kratzfeste Oberfläche auf einer ersten Seite hat, wobei eine entgegengesetzte zweite Seite einen wiederpositionierbaren transparenten Klebstofffilm (4) trägt, mit dem die Linse lösbar auf die äußere Oberfläche des Glases oder Displays klebbar ist.

11. Linse nach Anspruch 10, umfassend eine Dioptrie zwischen 0,5 Dioptrien und 4 Dioptrien, typischerweise 2.

12. Satz Linsen nach Anspruch 11, bei dem die Dioptrie jeder Linse des Satzes einen Wert zwischen 0,5 und 4 Dioptrien hat.

## Claims

1. A crystal/glass or screen of an apparatus for displaying an information visible to a user, the crystal or the screen including on its outer surface a transparent protective film including an outer surface with a convex area constituting a lens in order to facilitate reading, the transparent protective film constituting a lens is a layer (2) of material including a convex outer surface and an inner surface carrying a transparent repositionable glue film (4) by which said layer(2)is removably glued to the outer surface of the crystal or the screen (1).
**Characterized in that**
a first layer (1) of material constituting the surface of the crystal or the screen is formed of a polycarbonate with a thickness comprised between 0.2 mm and 2 mm, typically 0.8 to 1.2 mm,
said layer (2) with a convex outer surface is a second layer formed of a transparent sapphire glass having an anti-scratch surface and is superimposed on the first layer (1) thanks to positioning means (8) in which the second sapphire glass layer (2) has a maximum thickness including the convex area comprised between 0.2 and 2 mm, for example 0.4 mm and 1.2 mm, typically 0.5 and 0.6 mm,
the positioning means (8) for facilitating the positioning of the second layer of material (2) on the first layer of material (1) including a protuberance or a groove, arranged on the outer or inner periphery of the first material (1) so that these positioning means (8) surround all or part of the second layer of material (2) that covers the first layer of material (1) .

2. The crystal or screen according to claim 1, wherein the first layer of material (1), the second layer of material (2) and the repositionable glue film (4), once stacked, have a thickness comprised between 0.8 mm and 5 mm, typically 2 mm.

3. The crystal or screen according to any of claims 1 or 2, wherein the positioning means (8) include a notch formed in the first layer (1) of material.

4. The crystal or screen according to claim 3, wherein said notch constitutes an outer peripheral protuberance of the first layer (1) of material.

5. The crystal or screen according to any of the preceding claims, wherein the first layer (1) of material and/or the second layer (2) of material have an antireflection treatment to optical radiation in the visible wavelength range.

6. The crystal or screen according to any of the preceding claims, wherein the lens is a converging lens including a vergence comprised between 0.25 and 4 diopters, typically 2.

7. A wristwatch including a crystal according to any of claims 1 to 6.

8. A smartphone including a screen according to any of claims 1 to 6.

9. A tablet, interactive terminal, game console, bancomat or a touch table including a screen according to any of claims 1 to 6.

10. A lens for a crystal or a screen according to any of claims 1 to 6, the lens including a transparent sapphire glass layer, with a maximum thickness comprised between 0.2 and 2 mm, for example 0.4 mm and 1.2 mm, typically 0.5 and 0.6 mm, having an anti-scratch surface on a first face, a second opposite face carrying a transparent repositionable glue film (4) by which the lens is removably gluable on the outer surface of the crystal or the screen.

11. The lens according to claim 10, including a diopter comprised between 0.5 diopter and 4 diopters, typically 2.

12. A set of lenses according to claim 11, wherein the diopter of each lens of the set has a value comprised between 0.5 and 4 diopters.
